# EUROPÄISCHE PATENTANMELDUNG

(11) **EP 1 700 766 A2**
(43) Veröffentlichungstag der Anmeldung: **13.09.2006**
(21) Anmeldenummer: 06004940.0
(22) Anmeldetag: 10.03.2006
(51) Int. Cl.: B62B 5/00

(54) **Elektromotorische Antriebseinrichtung**

(30) Priorität: 12.03.2005 DE 102005011507
(71) Anmelder: Pomutz, Manfred, 38312 Seinstedt (DE)
(72) Erfinder: Pomutz, Manfred, 38312 Seinstedt (DE)
(74) Vertreter: König, Norbert

(57) **Zusammenfassung**

Die Erfindung betrifft eine elektromotorische Antriebseinrichtung für einen Behälter (4), insbesondere für Golfbags, mit einem Elektromotor (10), der von einer Batterie (60) gespeist ist und über ein Getriebe (26) ein Laufrad (28) antreibt, wobei der Elektromotor und die Batterie in ein Modul integriert sind, für das im Behälter ein Stauraum vorgesehen ist. Der Elektromotor (10) ist an einem Träger (5) trägerfest angeordnet, welcher lösbar mit dem Behälter (4) verbindbar ist. Das Getriebe (26) steht über den Elektromotor (10) mit einem Kugellager (30) in Wirkverbindung. Das Kugellager (30) ist zwischen einem motorgehäusefesten Bauteil (18, 24) und einer Felge (34) des Laufrads (28) oder einem mit der Felge (34) verbundenen ringförmigen Bauteil (32) angeordnet. Das Getriebe (26) weist wenigstens ein erstes von einem auf einer Abtriebswelle (22) des Elektromotors (10) wellenfest angeordneten Ritzel (44) angetriebenes Planeten-Zahnrad (46) und wenigstens ein zweites vom ersten Planeten-Zahnrad (46) angetriebenes, mit dem ersten Planeten-Zahnrad (46) verbundenes und kleiner als das erste Planeten-Zahnrad (46) ausgebildetes Planeten-Zahnrad (48) auf, das mit einem innenverzahnten, mit der Felge (34) des Laufrads (28) oder dem mit der Felge fest verbundenen Bauteil (18, 24) verbundenen Zahnkranz (52) in Wirkverbindung steht.

## Beschreibung

Die Erfindung betrifft eine elektromotorische Antriebseinrichtung gemäß Oberbegriff des Anspruchs 1, insbesondere für ein Golfbag.

Es sind elektromotorische Antriebe für Golfbags bekannt, die einen Tragrahmen zur Aufnahme des Golfbags aufweisen. Der Tragrahmen weist ein Fahrgestell mit zwei Hinterrädern, einem Vorderrad, einem Elektromotor und einer Aufnahme für eine Batterie, die den Elektromotor speist, auf, wobei entweder die Hinterräder oder das Vorderrad angetrieben werden, vgl. beispielsweise DE 37 14 066 und DE 34 28 272.

Es ist auch bekannt das Golfbag als starren selbsttragenden Behälter auszubilden, in dessen Wandung zwei Aufnahmen für Steckachsen von Tragrädern ausgebildet sind. Am unteren Ende des Behälters ist ein weiteres angetriebenes Rad angeordnet. Der Antrieb erfolgt mittels eines Elektromotors, der zusammen mit einer Batterie im unteren Teil des Behälters herausnehmbar angeordnet ist, vgl. DE 37 14 066.

Sämtliche bekannten Ausführungen elektromotorischer Antriebe für Golfbags haben den Nachteil, dass der Motor und die Batterie ein hohes Gewicht aufweisen und viel Platz beanspruchen und für die Batterie ein separates Ladegerät vorgesehen ist und auf Reisen mitgeführt werden muss.

Der Erfindung liegt die Aufgabe zugrunde, eine preiswert herstellbare elektromotorische Antriebseinrichtung anzugeben, die wenig Platz benötigt, ein geringes Gewicht und einen kompakten Aufbau aufweist und bei der sämtliche Teile inklusive Ladegerät und Batterie in einem einzigen Modul angeordnet sind.

Diese Aufgabe wird durch die Erfindung gemäß Anspruch 1 gelöst.

Vorteilhafte und zweckmäßige Weiterbildungen der Aufgabenlösung sind in den Unteransprüchen angegeben.

Die Erfindung schafft eine elektromotorische Antriebseinrichtung insbesondere für ein Golfbag, die robust, kompakt, leicht und kostengünstig ist. Alle Bauteile, wie Laufrad, Motor, Getriebe, Batterien, Antriebssteuerung mit Sensorik, Batterieladegerät, Netzstecker und Netzkabel, sind in einem Modul integriert, so dass insbesondere für Reisen die Gefahr, dass einzelne Teile der Antriebseinrichtung vergessen oder verlegt werden, vermieden ist. Das erfindungsgemäß ausgebildete axial sehr klein bauende Modul ist schnell und einfach montierbar, demontierbar und verstaubar und damit besonders für Kurz- und Fernreisen per Auto oder Flugzeug geeignet.

Die Erfindung soll nachfolgend anhand der beigefügten Zeichnung, in der ein Ausführungsbeispiel dargestellt ist, näher erläutert werden.

Es zeigt:

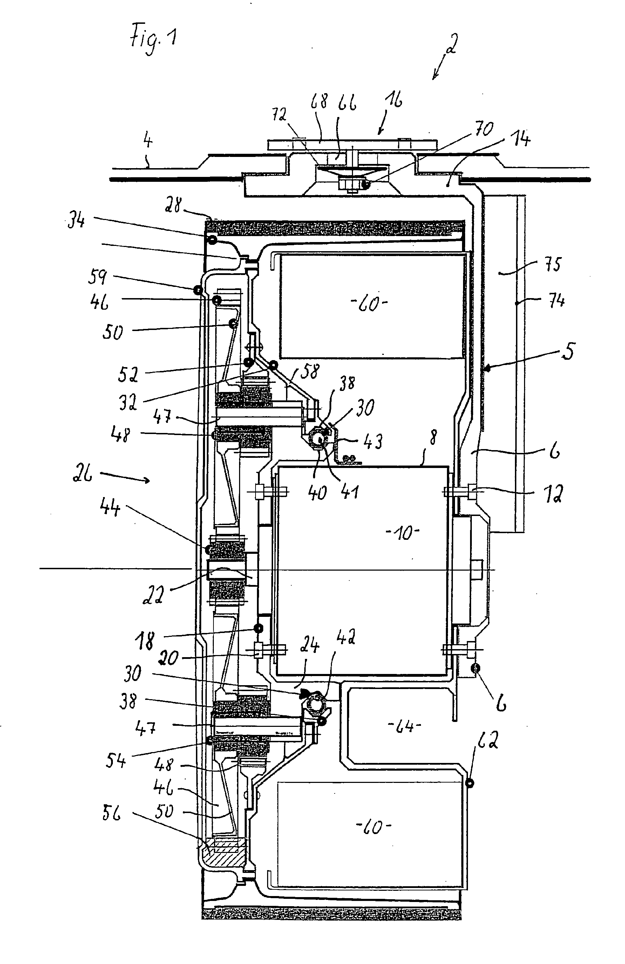

- Fig. 1: in einer schematischen Darstellung den Aufbau einer erfindungsgemäßen elektromotorischen Antriebseinrichtung für ein Golfbag und

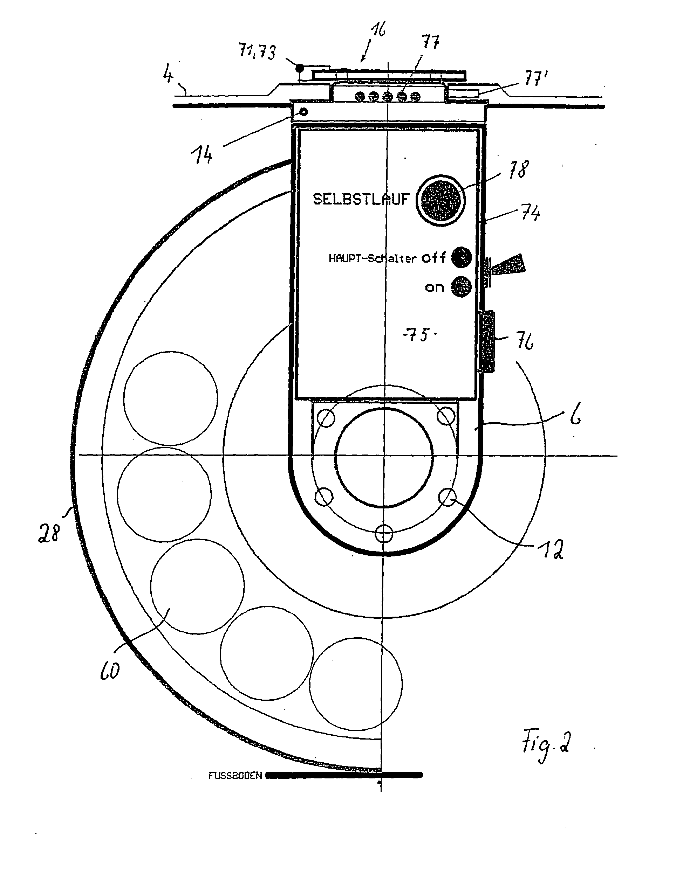

- Fig. 2: schematisch eine Seitenansicht auf die elektromotorische Antriebseinrichtung nach Fig. 1.

Gleiche und einander entsprechende Bauteile sind in den Figuren der Zeichnung mit den gleichen Bezugszeichen versehen.

Die Zeichnung zeigt ein elektromotorisches Antriebsmodul 2 für ein Golfbag 4 mit einem etwa L-förmigen, einen längeren und einen kürzeren Schenkel 6, 14 aufweisenden Hauptträger 5, an dessen nach unten zeigenden längeren Schenkel 6 ein Gehäuse 8 eines Elektromotors 10 innenseitig, im von den Schenkeln 6, 14 eingeschlossenen Raum trägerfest angeordnet ist, beispielsweise mittels Schrauben 12 angeschraubt ist, und dessen anderer kürzerer Schenkel 14 mit dem Bag 4 verbindbar ist, insbesondere über eine lösbare Bajonett-Rasteinrichtung 16, die weiter unten beschrieben wird.

Auf der trägerabgewandten Seite des Motorgehäuses 8 ist ein motorgehäusefestes ringförmiges Bauteil 18 befestigt, beispielsweise über Schrauben 20, das die Abtriebswelle 22 des Elektromotors 10 umgibt und einen ringförmigen, das Motorgehäuse 8 übergreifenden Flansch 24 aufweist.

Der Elektromotor 10 treibt über ein radiale und horizontale Kräfte aufnehmendes Getriebe 26 ein Laufrad 28 an, das über ein Kugellager 30 drehbar auf der Außenseite des Flansches 24 des ringförmigen Formteils 18 angeordnet ist. Hierzu ist ein ringförmiges Formteil 32 vorgesehen, dass mit der Felge 34 des Laufrades 28 fest verbunden ist und an dessen Ringinnenseite eine äußere nach innen zeigende kreisförmige Laufrinne 38 ausgebildet ist, der eine innere, am ringförmigen Flansch 24 des Formteils 18 ausgebildete nach außen zeigende kreisförmige Laufrinne 40 zugeordnet ist. Die Laufrinnen 38, 40 schließen einen Ringraum 41 ein, in dem Kugeln 42 zur Bildung des Kugellagers 30 für das Laufrad 28 angeordnet sind.

Das Kugellager 30 weist abwechselnd aufeinander folgend größere tragende Kugeln und kleiner als die tragenden Kugeln ausgebildete kleinere Kugeln auf, die die Rolle eines üblicherweise verwendeten Käfigs übernehmen und vorliegend für den notwendigen Abstand der tragenden Kugeln sorgen. Die Kugeln 42 werden über ein verschließbares Loch, das in der unbelasteten unteren Seite des ringförmigen Flansches 24 ausgebildet ist, in den Ringraum 41 eingefüllt. Der axial offene Kugellagerringraum 41 ist mittels einer Dichtung 43 abgedichtet.

Auf der Abtriebswelle 22 des Elektromotors 10 ist ein Ritzel 44 wellenfest angeordnet, das über das als (quasi) einstufiges Planetengetriebe ausgebildete Getriebe 26 das Laufrad 28 antreibt.

Das Getriebe 26 weist wenigstens ein, vorliegend zwei, mit dem Motorritzel 44 kämmende größere Planeten-Zahnräder 46 und wenigstens ein, vorliegend zwei, mit den Planeten-Zahnrädern 46 verbundene Planetenzahnräder 48 auf, die mit einem innenverzahnten Zahnkranz 52, der mit dem Laufrad in Wirkverbindung steht, kämmen. Der Zahnkranz ist vorliegend am ringförmigen Formteil 32 angeordnet, das wiederum, wie schon beschrieben, fest mit der Felge 34 verbunden ist. Die Planeten-Zahnräder 46, 48 sind drehbar um eine Achse 47 gelagert, die im motorgehäusefesten Bauteil 18 angeordnet sind.

Das Motorritzel 44 überträgt seine Kraft auf die größeren Planeten-Zahnräder 46, die ihre Kraft wiederum auf die kleineren Planeten-Zahnräder 48 übertragen, die jeweils über einen Steg 50 mit den größeren Planeten-Zahnrädern 46 verbunden sind. Die kleinen Planeten-Zahnräder 48 übertragen ihre Kräfte auf den innenverzahnten Zahnkranz 52, der an dem mit der Felge 34 verbundenen Formteil 32 fest angeordnet ist, und damit auf das Laufrad 28.

Zur Erzielung eines spielfreien Laufes werden die Planeten-Zahnräder 46, 48 vor dem Zusammenbau relativ zueinander verdreht.

Die Planeten-Zahnräder 46, 48 werden durch per Presssitz aufgebrachte Laufbuchsen 54 in Position gehalten.

Die Schmierung des Getriebes 26 erfolgt durch Spritzölschmierung über die in einen Ölsumpf 56 eintauchenden Planeten-Zahnräder 46.

Mit dem Bezugszeichen 58 ist eine Ablaufkante bezeichnet, die das Öl hält.

Das Getriebe 26 ist von einem Deckel 59 mit Passfläche abgedichtet.

Der Elektromotor 10 wird von mehreren, vorliegend vierzehn, Batterien 60 gespeist, die in einem Ringraum eines in einem im Rad 28 innerhalb der Felge 34 am Motorgehäuse 8 angebrachten ringförmigen Batterieträgers 62 angeordnet sind. Zwischen dem Batterie-Ringraum des Batterieträgers 62 und dem Elektromotor 10 befindet sich ein im Batterieträger ausgebildeter Stauraum 64 für ein fest angeordnetes, anschlussfertiges Netzkabel, über das die Batterien 60 aufgeladen werden.

Der kurze Schenkel 14 des Hauptträgers 5 übergreift die Lauffläche des Rades (28) mit Abstand und weist in radialer Richtung ein Bajonett-Rastverbindungsteil 66 der Bajonett-Rasteinrichtung16 und das Golfbag 4 ein diesem Teil 66 zugeordnetes Gegenstück 68 der Bajonett-Rasteinrichtung 16 auf. Nach Ineinanderstecken der Teile 66 und 68 verrastet die Bajonett-Rasteinrichtung 16 nach einer kleinen Drehung, bspw. um 30°, gegen einen Anschlag 71 über eine Schräge 73 . Eine Mutter 70 ermöglicht mit Hilfe einer Tellerfeder 72 eine individuelle Einstellung.

Auf dem langen Schenkel 6 des Hauptträgers 5 befindet sich ein Elektronikgehäuse 74, in dem eine elektronische Steuereinrichtung 75 und eine Batterieladeelektronik (ohne Transformator) untergebracht sind, und an dem zusätzlich sicherheitshalber noch eine Steckdose 76 zum Anschluss eines an eine Netzsteckdose anschließbaren Kabels angeordnet ist.

Am Bajonett-Verbinder 16, 66, 68 sind selbstreinigende Kontakte 77, 77' für Sensoren und Schalter, die vom Griff des Golfbags 4 aus bedient werden, angeordnet. Der Elektromotor 10 ist vorzugsweise ein Gleichstrom-Kollektor-Motor dessen Regelung über eine Puls-Weiten-Modulation in Abhängigkeit von einem Sensor mit Softanlauf und Geschwindigkeitsausgleich erfolgt. Per Druck auf einen Knopf 78 wird der Motor 10 mit einer fest programmierbaren Anzahl Radumdrehungen oder für eine bestimmte Zeit gestartet. Ebenso kann die Geschwindigkeit vorgegeben werden.

Die Sensor-/Steuereinrichtung ist so ausgebildet, dass sie in Bewegungsrichtung aktiv ist; dadurch passt sich die Geschwindigkeit des Golfbags an die Schrittgeschwindigkeit des Golfspielers automatisch an. Durch Druck auf den Sensor erfolgt Vorwärtsbewegung und durch Zug auf den Sensor Rückwärtsbewegung des elektromotorischen Antriebs, wobei die Geschwindigkeit dem Druck oder Zug auf den Sensor proportional ist. Für die Überwachung der Temperatur, der Spannung und der Zeit am Ladegerät ist ein Mikrokontroller in der elektronischen Steuereinrichtung 74 vorgesehen.

### Bezugszeichenliste

- 2: Antriebsmodul
- 4: Golfbag
- 5: Hauptträger
- 6: längerer Schenkel
- 8: Gehäuse
- 10: Elektromotor
- 12: Schrauben
- 16: lösbare Bajonett-Rasteinrichtung
- 18: Bauteil
- 20: Schrauben
- 22: Abtriebswelle
- 24: Flansch
- 26: Getriebe
- 28: Laufrad
- 30: Kugellager
- 32: ringförmiges Formteil
- 34: Felge
- 38: Laufrinne
- 40: Laufrinne
- 41: Ringraum
- 42: Kugeln
- 43: Dichtung
- 44: Ritzel
- 46: großes Planetenzahnrad
- 48: kleines Planetenzahnrad
- 50: Steg
- 52: Zahnkranz
- 54: Laufbuchse
- 56: Ölsumpf
- 58: Ablaufkante
- 59: Deckel
- 60: Batterie
- 62: Batterieträger
- 64: Stauraum
- 66: Bajonett-Rastverbindungsteil
- 68: Gegenstück
- 70: Mutter
- 72: Tellerfeder
- 74: Elektronikgehäuse
- 75: elektronische Steuereinrichtung
- 76: Steckdose
- 77, 77': Kontakte
- 78: Knopf

## Patentansprüche

1. Elektromotorische Antriebseinrichtung für einen Behälter, insbesondere für ein Golfbag, mit einem Elektromotor, der von wenigstens einer Batterie gespeist ist und über ein Getriebe ein Laufrad antreibt, wobei der Elektromotor und die Batterie in einem Modul integriert sind, für das im Behälter ein Stauraum vorgesehen ist, **dadurch gekennzeichnet, dass**
- der Elektromotor (10) an einem Träger (5) trägerfest angeordnet ist, welcher lösbar mit dem Behälter (4) verbindbar ist,
- das Getriebe (26) über den Elektromotor (10) mit einem Kugellager (30) in Wirkverbindung steht und
- das Kugellager (30) zwischen einem motorgehäusefesten Bauteil (18, 24) und einer Felge (34) des Laufrads (28) oder einem mit der Felge (34) verbundenen ringförmigen Bauteil (32) angeordnet ist.

2. Elektromotorische Antriebseinrichtung nach Anspruch 1, **dadurch gekennzeichnet, dass** das Getriebe (26) wenigstens ein von einem auf einer Abtriebswelle (22) des Elektromotors (10) wellenfest angeordneten Ritzel (44) angetriebenes erstes Planeten-Zahnrad (46) und wenigstens ein zweites vom ersten Planeten-Zahnrad (46) angetriebenes, mit dem ersten Planeten-Zahnrad (46) verbundenes und kleiner als das erste Planeten-Zahnrad (46) ausgebildetes Planeten-Zahnrad (48) aufweist, das mit einem innenverzahnten, mit der Felge (34) des Laufrads (28) oder dem mit der Felge fest verbundenen Bauteil (18, 24) verbundenen Zahnkranz (52) in Wirkverbindung steht.

3. Elektromotorische Antriebseinrichtung nach Anspruch 2, **dadurch gekennzeichnet, dass** jeweils ein erstes und ein zweites Planeten-zahnrad (46, 48) auf einer gemeinsamen motorgehäusefesten Achse (47) angeordnet sind.

4. Elektromotorische Antriebseinrichtung nach Anspruch 3, **dadurch gekennzeichnet, dass** die Planeten-Zahnräder (46, 48) durch per Presssitz aufgebrachte Laufbuchsen (54) in Position auf den Achsen (47) gehalten sind.

5. Elektromotorische Antriebseinrichtung nach Anspruch 3 oder 4, **dadurch gekennzeichnet, dass** die Achsen (47) im motorgehäusefesten Bauteil (18, 24) angeordnet sind.

6. Elektromotorische Antriebseinrichtung nach Anspruch 1, **dadurch gekennzeichnet, dass** das Kugellager (30) von einem von einer felgenfesten Laufrinne (38) und einer motorgehäusefesten Laufrinne (40) gebildeten Ringraum (41) und vom im Ringraum (41) abwechselnd aufeinander folgend angeordnet größeren, tragenden Kugeln und kleineren Kugeln gebildet ist.

7. Elektromotorische Antriebseinrichtung nach Anspruch 1, **dadurch gekennzeichnet, dass** auf dem Träger (5) eine elektronische Steuereinrichtung (74) zur Steuerung des Elektromotors (10) und ein Batterieladegerät, an das ein in einem Stauraum (64) befindliches anschlussbereites Kabel zum Anschluss an eine Netzsteckdose angeschlossen ist, angeordnet sind.

8. Elektromotorische Antriebseinrichtung nach Anspruch 1 oder 7, **dadurch gekennzeichnet, dass** am Träger (5) ein Bajonett-Rastverbindungsteil (66) angeordnet ist, das mit einem am Behälter angeordneten, dem Bajonett-Rastverbindungsteil (66) zugeordneten Gegenstück (68) eine Bajonett-Rasteinrichtung (16) bildet und mit dem Gegenstück (68) verrastbar ist.

9. Elektromotorische Antriebseinrichtung nach Anspruch 8, **dadurch gekennzeichnet, dass** an den Teilen (66, 68) der Rasteinrichtung (16) selbstreinigende Kontakte (77, 77') für Sensoren und Schalter, die vom Behälter (4) aus bedient werden, angeordnet sind.

10. Elektromotorische Antriebseinrichtung nach Anspruch 1, 2 oder 7, **dadurch gekennzeichnet, dass** der Elektromotor (10) ein Gleichstrom-Kollektor-Motor ist, der über eine Puls-Weiten-Modulation in Abhängigkeit von einem Sensor mit Softanlauf und Geschwindigkeitsausgleich geregelt wird.

11. Elektromotorische Antriebseinrichtung nach Anspruch 7, **dadurch gekennzeichnet, dass** der Elektromotor (10) über die elektronische Steuereinrichtung (74) für eine bestimmte Zeit oder mit einer fest programmierbaren Anzahl Radumdrehungen und einer vorgebbaren Geschwindigkeit gestartet werden kann.

12. Elektromotorische Antriebseinrichtung nach Anspruch 1 oder 2, **dadurch gekennzeichnet, dass** mehrere Batterien (60) in einem im Rad (28) innerhalb der Felge (34) am Motorgehäuse (8) angebrachten ringförmigen Batterieträger (62) angeordnet sind.

13. Elektromotorische Antriebseinrichtung nach Anspruch 1, 2 oder 7, **dadurch gekennzeichnet, dass** der Stauraum (64) im Batterieträger (62) ausgebildet und in einem Raum zwischen dem Batterieaufnahmeraum des Batterieträgers (62) und dem Elektromotor (10) angeordnet ist.

14. Elektromotorische Antriebseinrichtung nach einem der vorhergehenden Ansprüche, **dadurch gekennzeichnet, dass** der Träger (5) etwa L-Form mit einem längeren Schenkel (6), an dessen Innenseite der Elektromotor (10) und an dessen Außenseite die elektronische Steuereinrichtung (74) angeordnet sind, und mit einem kürzeren, die Lauffläche des Rades (28) mit Abstand überragenden Schenkel (14) aufweist, auf dessen Außenseite das Rastverbindungsteil (66) der Bajonett-Rasteinrichtung (16) angeordnet ist.
